# EUROPÄISCHE PATENTSCHRIFT

(11) **EP 2 418 920 B1**
(45) Veröffentlichungstag und Bekanntmachung des Hinweises auf die Patenterteilung: **26.12.2012**
(21) Anmeldenummer: 10405141.2
(22) Anmeldetag: 21.07.2010
(51) Int. Cl.: H05B 41/282, H05B 41/295

(54) **Verfahren und Vorrichtung zum Zünden einer Fluoreszenz-Lampe**
Method and device for igniting a fluorescent lamp
Procédé et dispositif destinés à l'allumage d'une lampe fluorescente

(43) Veröffentlichungstag der Anmeldung: 15.02.2012
(73) Patentinhaber: polynom ag, 5314 Kleindöttingen (CH)
(72) Erfinder: Noe, Michel, 6314 Unterägeri (CH); Schneider, Pierre, 5314 Kleindöttingen (CH)
(74) Vertreter: Frei Patent Attorneys

(56) Entgegenhaltungen:
- EP-A1- 1 819 207
- WO-A1-2009/077951
- DE-A1- 19 903 015
- US-A1- 2007 285 955

## Beschreibung

Die Erfindung betrifft eine Zündvorrichtung und ein Zündverfahren für eine Fluoreszenz-Lampe, insbesondere zur Anwendung in einer Notleuchte während eines Notbetriebs. Die Erfindung bezieht sich auf eine elektronische Schaltung und ein Zündverfahren zur Zündung einer akkubetriebenen Fluoreszenz-Lampe gemäss dem Oberbegriff der entsprechenden unabhängigen Patentansprüche.

### STAND DER TECHNIK

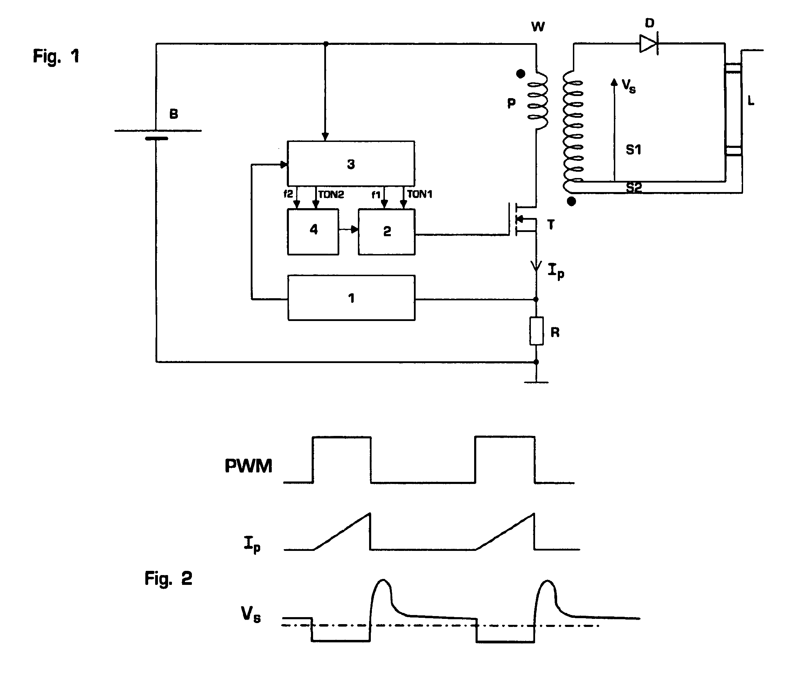

Der Konverter, welcher in einer Notleuchte mit Fluoreszenz-Lampe eingebaut wird, um das Leuchtmittel zu zünden, kann als Eintakt-Sperrwandler (Flyback converter) gebaut werden. Auf der Figur 1 ist ein solcher Konverter gezeichnet. Der Transistor T (Bipolar oder Mosfet) wird geschaltet. Der Strom fliesst aus dem Akku B in die Primär-Wicklung des Wandlers W. Die Diode D verhindert den Stromfluss auf der Sekundär-Seite. Somit wird die Energie aus dem Akku B in der Induktivität der Primär-Wicklung gespeichert. Wenn der Transistor T blockiert wird, steigt die Sekundär-Spannung, bis der Strom in der Sekundär-Wicklung fliessen kann. Sobald der Transistor T wieder eingeschaltet wird, ist die Diode D blockiert, und die Energie kann wieder im Wandler gespeichert werden. Ein solcher Konverter ist allgemein bekannt, und wird seit mehr als 20 Jahren für die Notbeleuchtung angewendet.

Die Druckschrift EP 1 819 207 A1 des gleichen Anmelders beschreibt eine von diesen Prinzipien ausgehende Schaltung zum Zünden und Betreiben einer Fluoreszenz-Lampe.

Der Nachteil einer solchen Anwendung bei der Zündung einer Fluoreszenz-Lampe liegt darin, dass der Lampenstrom immer in die gleiche Richtung fliesst bzw. dass die Elektronen immer aus der gleichen Elektrode fliessen. Mit einem Eintakt-Sperrwandler kann nur ein Gleichstrombetrieb erzeugt werden. Für die Zündung einer Fluoreszenz-Lampe ist ein Wechselstrombetrieb viel besser geeignet.

Ein anderes Problem liegt darin, dass die Leistung im Notbetrieb im Vergleich zur Nennleistung der Schaltung und der Lampe reduziert ist, da die Leistung vom Akku geliefert wird. Das heisst auch, dass die Energie, welche beim Einschalten des Transistors T in der Induktivität der Primär-Wicklung gespeichert ist, niedrig ist. Wenn diese zu niedrig ist, kann der Stromfluss in der Diode D bzw. die Ionisierung des Gases kurz nach der Übertragung der Energie auf die Sekundär-Seite unterbrochen werden. Dies führt zu einem beschleunigten Verschleiss der Lampe.

Mit den Gleichstrombetrieb und der reduzierten Leistung im Notbetrieb ist die Lebensdauer der Fluoreszenz-Lampe stark reduziert. Bei der Anwendung in einer Notleuchte kann diese Verkürzung der Lebensdauer in Kauf genommen werden, da der Notbetrieb nur selten auftritt. Es ist aber trotzdem nötig, den Gleichstrombetrieb so zu steuern, dass die Lebensdauer der Fluoreszenz-Lampe optimiert wird.

### DARSTELLUNG DER ERFINDUNG

Es ist deshalb Aufgabe der Erfindung, eine elektronische Schaltung und ein Zündverfahren zur Zündung einer akkubetriebenen Fluoreszenz-Lampe der eingangs genannten Art zu schaffen, welche die oben genannten Nachteile behebt und insbesondere die Lebensdauer der Fluoreszenz-Lampe optimiert.

Diese Aufgabe lösen eine elektronische Schaltung und ein Zündverfahren zur Zündung einer akkubetriebenen Fluoreszenz-Lampe mit den Merkmalen der entsprechenden unabhängigen Patentansprüche.

Bei herkömmlichen Konverter-Regelungen in solchen Anwendungen fliesst der getaktete Strom mit einem kontinuierlich laufenden Modus aus dem Akku. Dadurch bleibt die Leistungs-Übertragung während des Notbetrieb konstant - oder nahezu konstant - wenn der Akku-Strom geregelt wird. D.h., dass die übertragene Energie bei jeder Zündung immer den gleichen Wert beträgt bzw. auf dem gleich niedrigen Niveau gehalten wird, da die im Akku gespeicherte Energie begrenzt ist.

Mit der Erfindung ist im Gegensatz dazu ein Verfahren beschrieben, bei welchem die Leistungs-Übertragung regelmässig unterbrochen wird. Dieses Verfahren weist vorzugsweise folgende Merkmale auf:
- Die Frequenz, mit welcher die Unterbrechungen stattfinden, ist vorzugsweise hoch genug (z.B. über 50 Hz oder vorzugsweise über 100 Hz), damit die Unterbrechungen und die entsprechenden Helligkeitsschwankungen vom menschlichen Auge nicht oder nur schwach wahrgenommen werden können.
- Im Vergleich mit kontinuierlich geregelten Stromflüssen ist der durchschnittliche Wert der aus dem Akku entzogene Leistung derselbe. Bei jeder Übertragung während der Freigabedauer ist jedoch die Energie höher und dadurch die Zündung der Lampe viel besser.

Es ist dazu die elektronische Schaltung zur Zündung einer akkubetriebenen Fluoreszenz-Lampe ein Eintakt-Sperrwandler mit einem elektronischen Schalter, und weist die folgenden Steuerkomponenten auf:
- eine kombinierte PWM-Signal-Steuerung, welche dazu ausgebildet ist, anhand von ersten Steuerparametern, umfassend eine erste Frequenz und eine Einschaltdauer, und anhand von zweiten Steuerparametern, umfassend eine zweite Frequenz und eine Freigabedauer, ein erstes PWM-Signal zur Steuerung des elektronischen Schalters des Wandlers zu bilden, wobei die zweite Frequenz tiefer ist als die erste Frequenz; und
- eine Stromsteuerung, welche den Entladestrom (also den Primärstrom Ip durch den Wandler und durch den Schalter) des Akkus kontrolliert, indem sie alle Steuerparameter beider PWM-Signal-Steuerungen bestimmt und an beide PWM-Signal-Steuerungen übermittelt.

Die PWM-Signal-Steuerung ist dazu ausgebildet, ein mit der zweiten Frequenz wiederholtes Signal zu bilden, welches jeweils in einer Periode nur während der Freigabedauer eine Folge von mit der ersten Frequenz wiederholten Pulsen mit der Einschaltdauer aufweist.

Konzeptionell betrachtet - auch wenn sie beispielsweise auf einem Mikroprozessor realisiert ist - kann die kombinierte PWM-Signal-Steuerung betrachtet werden als eine Kombination von zwei PWM-Signal-Steuerungen:
- eine erste PWM-Signal-Steuerung, welche anhand der ersten Steuerparameter ein erstes PWM-Signal zur Steuerung des elektronischen Schalters des Sperrwandlers bildet.
- eine zweite PWM-Signal-Steuerung, welche anhand der zweiten Steuerparameter ein zweites PWM-Signal bildet zur Freigabe bzw. zur Sperre der ersten PWM-Signal-Steuerung des elektronischen Schalters des Sperrwandlers.

Dabei ist die Steuerung dazu ausgebildet, die Ansteuerung des Schalters mittels des zweiten PWM-Signals zu sperren oder freizugeben, indem jeweils in einer Periode des zweiten PWM-Signals während der Freigabedauer das erste PWM-Signal zur Ansteuerung des Schalters (T) freigegeben ist, und in der restlichen Zeit der Periode das erste PWM-Signal nicht zur Ansteuerung des Schalters freigegeben ist.

Das Bestimmen der ersten und zweiten Steuerparameter kann durch Auslesen von einem oder mehreren Steuerparametern aus einem Speicher, und durch Anpassen von einem oder mehreren Steuerparametern nach Massgabe von Messungen in einer Startphase der Lampe oder von Messungen während des Betriebes der Lampe geschehen. Damit kann beispielsweise der Primärstrom und somit auch die Leistungsentnahme aus dem Akku auf einen für den Notbetrieb vorgegebenen Wert geregelt werden.

Die Funktion der Stromsteuerung bei der Bestimmung der ersten Steuerparameter geschieht beispielsweise wie in der eingangs erwähnten EP 1 819 207 A1 des gleichen Anmelders, welche hiermit durch Rückbezug in ihrer Gesamtheit in die vorliegende Anmeldung aufgenommen wird.

Zur Bestimmung der zweiten Steuerparameter kann beispielsweise die zweite Frequenz konstant gehalten werden und die Freigabedauer variiert werden. Mit der Länge der Freigabedauer kann der Durchschnittswert des Entladestroms Ip über eine zweite Periode gesteuert werden, und damit auch die durchschnittliche Leistungsaufnahme aus dem Akku. Um eine Abkühlung der Lampe zu vermeiden sind mehrere Pulse mit der ersten Einschaltdauer nacheinander angeordnet, und nicht z.B. gleichverteilt über eine zweite Periode der zweiten PWM-Steuerung.

Die Veränderung beider Frequenzen, wie auch die Veränderung beider Einschaltdauern ist vorzugsweise als Regelung anhand des Entladestromes respektive Primärstromes Ip ausgerührt. Der Entladestrom kann dazu selber gemessen werden, oder aus einer Messung der Akkuspannung berechnet werden. Die dazu benötigte Messeinrichtung (wie Sensoren, A/D-Wandler, Filter) respektive Berechnungsmittel (wie ein Mikrocontroller oder eine analoge Schaltung) werden dabei zusammenfassend als Strombestimmungsmittel bezeichnet. In einer bevorzugten Ausfiihrungsform der Erfindung sind die Strombestimmung und die Bestimmung der Steuerparameter beider PWM-Signals in einer einzigen Funktion kombiniert, ohne dass der Primärstrom explizit bestimmt wird. Diese Funktion wird als Steuerwertbestimmungsmittel bezeichnet. In einer bevorzugten Ausführungsform der Erfindung sind das Strombestimmungsmittel oder die Steuerwertbestimmungsmittel durch tabellierte Funktionen implementiert.

Der Eintakt-Sperrwandler (flyback converter), der die Fluoreszenz-Lampe im Notbetrieb zündet, wird also mit einem modifizierten Pulsbreitemodulierverfahren (PWM) gesteuert.

Ein bevorzugtes Regelungsverfahren läuft wie folgt ab: Die bei jeder Takt-Periode an die Fluoreszenz-Lampe übertragene Energie wird, vorzugsweise dem Typ der Fluoreszenz-Lampe entsprechend, angepasst, da die erfolgreiche Zündung der Lampe von dieser Energie abhängt. So wird die Einschaltdauer der ersten PWM-Signal-Steuerung festgelegt, so dass die Lampe sicher zündet. Die Frequenz dieser ersten PWM-Signal-Steuerung wird vorzugsweise als konstante Frequenz im nicht hörbaren, also akustisch nur schwach oder nicht mehr wahrnehmbaren Bereich (d.h. über 10 kHz oder vorzugsweise über 16 kHz) festgelegt.

Die Frequenz der zweiten PWM-Signal-Steuerung wird vorzugsweise als konstante Frequenz im optisch durch das menschliche Auge nicht oder fast nicht wahrnehmbaren Bereich von Helligkeitsänderungen (d.h. über 50 Hz oder vorzugsweise über 100 Hz) festgelegt. Die Stromregelung, welche den Durchschnitts-Wert des aus dem Akku entnommenen Stromes oder den Durchschnitts-Wert der aus dem Akku entnommenen Leistung regelt, erfolgt über die Steuerung der Freigabedauer des zweiten PWM-Signal-Steuerung. Vorzugsweise beträgt diese Freigabedauer ein ganzzahliges Vielfaches von Takt-Perioden der ersten PWM-Signal-Steuerung.

Es versteht sich, dass die Vorgabe von Frequenzen und Einschaltdauern nur eine von vielen Möglichkeiten ist, ein PWM-Signal zu beschreiben. Alternativ kann beispielsweise anstelle der Frequenz eine Periode vorgegeben werden und/oder anstelle einer absoluten Einschaltdauer eine relative Einschaltdauer respektive Aussteuerungsgrad oder Tastverhältnis (duty cycle).

### KURZE BESCHREEBUNG DER ZEICHNUNGEN

Im folgenden wird der Erfindungsgegenstand anhand von bevorzugten Ausfiihrungsbeispielen, welche in den beiliegenden Zeichnungen dargestellt sind, näher erläutert. Es zeigen jeweils schematisch:
- Figur 1: eine Schaltung zum Betrieb einer Fluoreszenz (FL)-Lampe gemäss dem Stand der Technik;
- Figur 2: einen Signalverlauf der ersten PWM-Signal-Steuerung; und
- Figur 3: einen Signalverlauf der kombinierten PWM-Signal-Steuerungen.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

In der **Figur 1** ist ein Konverter gezeichnet. Er weist die folgenden Leistungskomponenten auf:
- Wandler W. Der Wandler W ist mit der zusätzlichen Wicklung S2 auf der Sekundärseite gezeichnet, welche das Leuchtmittel L einseitig vorheizen kann. Mit dieser Vorheizung kann die Lebensdauer des Leuchtmittels L verlängert werden. Natürlich kann der Konverter auch ohne Vorheizung funktionieren.
- Transistor T. Dieser Transistor dient als elektronischer oder "solid-state" Schalter ist als Mosfet gezeichnet. Natürlich kann der Konverter auch mit anderen Halbleiter-Technologien gebaut werden.
- Diode D. Unter gewissen Umständen ist es möglich, auf diese Diode D zu verzichten, da das Leuchtmittel L den Stromfluss blockieren kann, auch wenn der Transistor T leitet. Die Diode D ist aber dann nötig, wenn die Variantenvielfalt der eingesetzten Leuchtmittel sehr gorss sein muss, und auch Leuchtmittel mit kleinen Leistungen betrieben werden müssen.

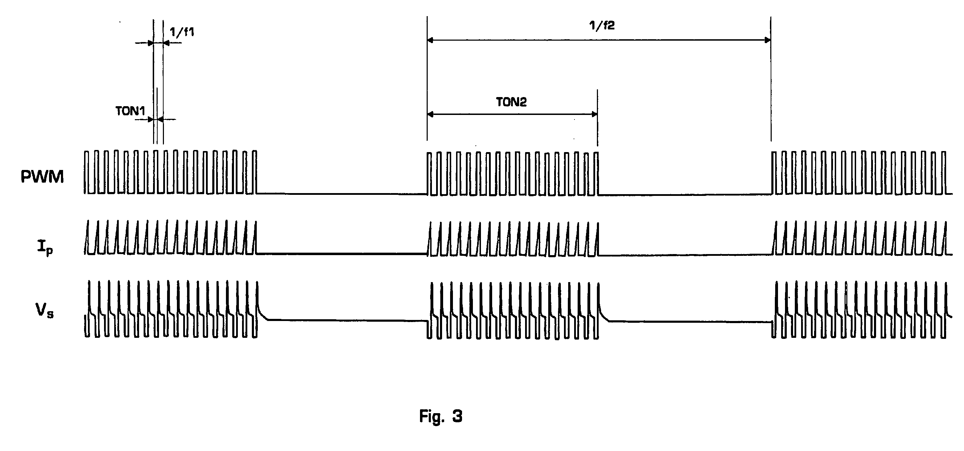

Ausserdem weist der Konverter die folgenden Steuerkomponenten auf:
- Strommessung und Filterung 1: Der Entladestrom Ip des Akkus B wird gemessen und das Messsignal wird gefiltert. Die Messung erfolgt, wie in der Figur gezeichnet, auf der Verbindung zum Akku-Minuspol, kann alternativ auch auf der Verbindung zum Akku-Pluspol gemacht werden. Die Messung kann wie gezeigt als Spannungsmessung über einem Widerstand (Shunt) R erfolgen, oder alternativ auch über Hall-Sensoren oder andere herkömmliche Verfahren. Diese Messung kann auch über die Messung der Drain-Spannung des Mosfet-Transistors T während seinem eingeschalteten Zustand erfolgen.
- Erste PWM-Signal-Steuerung 2: Dieses Teil erzeugt das Steuersignal, welches den Transistor T ein- bzw. ausschaltet. Es gibt zwei erste Parameter, die das Signal bestimmen: Eine erste Frequenz f1 und eine erste Dauer TON1. Während der Dauer TON1 ist der Transistor T eingeschaltet, wodurch der Strom Ip in der Primär-Wicklung P fliesst. Dieses erste PWM-Signal wird nur während der Einschaltdauer der zweiten PWM-Signales freigegeben. Die grundsätzliche Funktionsweise und eine Möglichkeit zur Bestimmung von f1 und TON1 sind in der bereits erwähnten EP 1 819 207 A1 beschrieben. Es können also die ersten Parameter f1, TON1 bei bekanntem Lampentyp vorgegeben sein, oder beim Einschalten der Lampe automatisch bestimmt und anschliessend im Wesentlichen konstant gehalten werden. Der zeitliche Verlauf des Steuersignales am Transistor T, des Primärstromes respektive Entladestromes Ip und der Sekundärspannung Vs ist in **Figur 2** über etwa eine erste Periode 1/fl dargestellt. Die Lampe wird also mit der ersten Frequenz f1 gezündet.
- Zweite PWM-Signal-Steuerung 4: Es gibt zwei Parameter, die die zweite PWM-Signal-Steuerung bestimmen: Eine zweite Frequenz f2 und eine zweite Dauer TON2, auch Freigabedauer genannt. Nur jeweils während eines Zeitintervalles mit der Freigabedauer TON2 ist das zweite PWM-Signal eingeschaltet und ist der Transistor T mit dem ersten PWM-Signal getaktet. D.h. dass die erste PWM-Signal-Steuerung respektive das darin erzeugte erste PWM-Signal intermittierend freigegeben wird, wie in der auf der **Figur 3** im zeitlichen Verlauf über mehrere zweite Perioden 1/f2 dargestellt ist. Der Wert der zweiten Frequenz f2 kann im Wesentlichen konstant gehalten werden. Er ist einerseits so hoch, dass die entsprechenden Helligkeitsschwankungen von Auge nicht wahrnehmbar sind. Andererseits ist er tief genug, dass das Verhältnis zur ersten Frequenz f1 gross bleibt. Beispielsweise ist die zweite Frequenz f2 um einen Faktor 50 bis 100 bis 200 kleiner als die erste Frequenz fl. Dann kann die Variation von TON2 durch Vorgabe der Anzahl Pulse mit TON1 pro zweite Periode 1/f2 geschehen, und eine Variation um einen einzelnen Puls ist im Vergleich zur Gesamtzahl der Pulse klein, so dass eine präzise Regelung möglich ist. Durch Variation der Freigabedauer TON2 kann der Durchschnittswert des Primärstroms Ip geregelt werden.
- Stromregelung (oder Stromsteuerung) 3 mittels PWM-Signal-Steuerung: Der Entlade-Strom Ip, oder ein repräsentativer Wert für den Entladestrom, wird mit einem Soll-Wert verglichen, und einer oder mehrere Steuerparameter beider PWM-Signal-Steuerungen werden als Steuergrössen berechnet und angepasst. Beispielsweise wird dabei die Dauer TON2 respektive die Anzahl der Pulse mit Dauer TON1 als Steuergrösse verwendet, und werden die anderen Parameter dabei konstant gehalten.

Zur Strommessung ist noch das Folgende zu bemerken: Die Verbindung zwischen der Strommessung und Filterung 1 und dem Strompfad deutet die Messung nur schematisch an; wenn dazu beispielsweise die Spannung über dem Shunt R gemessen wird, sind natürlich zwei elektrische Anschlüsse erforderlich. Oder wenn dazu beispielsweise die Drain-Spannung des Mosfet-Transistors T gemessen wird, ist natürlich die Verbindung zu diesem Drain erforderlich.

Die Messung eines Sensorsignals - Spannung am Shunt R oder an einem Hall-Element etc. - geschieht vorzugsweise mit einem mehrstufigen A/D-Wandler oder beispielsweise mit zwei Komparatoren, deren Schwellwerte durch die Strommessung und Filterung 1 einstellbar sind und dauernd nachgeführt werden.

Die Strommessung und Filterung 1 liefert einen gefilterten Wert für den Primärstrom Ip, vorzugsweise einen Mittelwert des über eine Periode variierenden Stromes. Die Filterung kann in bekannter Weise durch analoge oder digitale Mittel vor respektive nach der A/D-Wandlung geschehen.

Natürlich können die drei Steuer-Funktionen Strommessung und Filterung 1, PWM-Signal-Steuerungen 2 und 4, und Stromsteuerung 3 vollständig oder teilweise mit einem Mikrokontroller realisiert werden.

Wenn ein Mikroprozessor oder Mikrocontroller verwendet wird, kann in einer anderen bevorzugten Ausführungsform der Erfindung auf die Strommessung und Filterung verzichtet werden: Solange der Eintakt-Sperrwandler im so genannten "discontinuous mode" arbeitet, ist der Stromverlauf so wie in den Figuren 2 oder 3 gezeichnet, wobei er immer beim Wert Null beginnt. Das heisst, dass die am Ende der Periode die im Wandler gespeicherte Energie praktisch auf Null gesunken ist. Somit kann der Strom berechnet werden: Anhand von Werten von Akkuspannung, Parametern beider PWM-Signal-Steuerungen und Primärinduktivität P des Sperrwandlers berechnet der Mikroprozessor respektive Mikrocontroller den theoretischen Primärstrom Ip oder Entladestrom des Akkus, ohne diesen messen zu müssen.

In einer weiteren bevorzugten Ausführungsform der Erfindung wird die Berechnung ersetzt durch Tabellen von im Voraus berechneten und gespeicherten Werten ("lookup table"), die im Speicher des Mikrocontrollers abgelegt sind. Anhand der gemessenen Akkuspannung und der angegebenen Parametern beider PWM-Signal-Steuerung wird der zugeordnete theoretische Tabellenwert für den Primärstrom Ip aus dem Speicher geholt. Es ist auch eine gemischte Implementation möglich, in welcher Abhängigkeiten von bestimmten Parametern durch eine Tabelle und Abhängigkeiten von anderen Parametern durch eine Berechnung ausgedrückt sind. Der Einfluss der über die Zeit konstanten aber je nach Gerät variierenden Primärinduktivität P wird bei der Berechnung der Tabelle berücksichtigt, indem die Primärinduktivität P nach der Produktion gemessen wird.

## Patentansprüche

1. **Elektronische Schaltung** zur Zündung einer akkubetriebenen Fluoreszenz-Lampe (L), welche Schaltung als Wandler (W) einen Eintakt-Sperrwandler mit einem elektronischen Schalter, insbesondere einem Transistor (T), zur Schaltung eines Primärstromes (Ip) durch den Wandler (W) aufweist und die folgenden Steuerkomponenten aufweist:
• eine kombinierte PWM-Signal-Steuerung (2,4), welche dazu ausgebildet ist, anhand von ersten Steuerparametern, umfassend eine erste Frequenz (f1) und eine Einschaltdauer (TON1), und anhand von zweiten Steuerparametern, umfassend eine zweite Frequenz (f2) und eine Freigabedauer (TON2), ein erstes PWM-Signal zur Steuerung des elektronischen Schalters (T) des Wandlers (W) zu bilden, wobei die zweite Frequenz (f2) tiefer ist als die erste Frequenz (f1),
• eine Stromsteuerung (3), welche den Primärstrom (Ip) durch den Wandler (W) kontrolliert, indem sie die ersten und zweiten Steuerparameter (f1, f2, TONI, TON2) der beiden PWM-Signal-Steuerungen (2, 4) bestimmt,
wobei die PWM-Signal-Steuerung (2,4) dazu ausgebildet ist, ein mit der zweiten Frequenz (f2) wiederholtes Signal zu bilden, welches jeweils in einer Periode (1/f2) nur während der Freigabedauer (TON2) eine Folge von mit der ersten Frequenz (f1) wiederholten Pulsen mit der Einschaltdauer (TON1) aufweist.

2. Elektronische Schaltung gemäss Anspruch 1, aufweisend ein Strombestimmungsmittel zur Bestimmung eines repräsentativen Wertes für den durch den elektronischen Schalter (T) gesteuerten Primärstrom (Ip), wobei die Stromsteuerung (3) zur Anpassung mindestens eines der Steuerparameter (fl, f2, TON1, TON2) des PWM-Signals anhand dieses repräsentativen Wertes und damit zur Regelung des Primärstrom (Ip) ausgebildet ist.

3. Elektronische Schaltung gemäss Anspruch 2, wobei das Strombestimmungsmittel eine Mess- und Filterschaltung (2) zum Bestimmen eines gemessenen Wertes des Primärstroms (Ip) durch eine Messung mit anschliessender Filterung ist.

4. Elektronische Schaltung gemäss Anspruch 3, wobei die Mess- und Filterschaltung (2), zur Messung und Filterung des Primärstroms (Ip) über einen Widerstand (R) und einen Verstärker ausgebildet ist und dadurch zum Bestimmen eines zeitlichen Mittelwertes des Primärstromes (Ip) ausgebildet ist.

5. Elektronische Schaltung gemäss Anspruch 4, wobei das Strombestimmungsmittel zur Bestimmung eines theoretischen Wertes für den Primärstrom (Ip) anhand einer Messung einer Akkuspannung eines den Wandler (W) speisenden Akkus (B) ausgebildet ist.

6. Elektronische Schaltung gemäss Anspruch 5, wobei das Strombestimmungsmittel zur Berechnung des theoretischen Wertes für den Primärstrom (Ip) anhand der Messung der Akkuspannung, einer Primär-Induktivität (P) des Wandlers (W) und der Steuerparameter (fl, f2, TON1, TON2) beider PWM-Signale ausgebildet ist.

7. Elektronische Schaltung gemäss Anspruch 5, wobei das Strombestimmungsmittel zur Auslesen des theoretischen Wertes für den Primärstrom (Ip) anhand der Messung der Akkuspannung aus mindestens einer gespeicherten Tabelle ausgebildet ist.

8. Elektronische Schaltung gemäss einem der bisherigen Ansprüche, wobei die erste Frequenz höher als 10 kHz ist, vorzugsweise höher als 16 kHz.

9. Elektronische Schaltung gemäss einem der bisherigen Ansprüche, wobei die zweite Frequenz höher als 50 Hz ist, vorzugsweise höher als 100 Hz.

10. **Notleuchte,** enthaltend eine elektronische Schaltung gemäss einem der Ansprüche 1 bis 9 zur Zündung einer Fluoreszenz-Lampe (L).

11. **Verfahren** zur Zündung einer akkubetriebenen Fluoreszenz-Lampe (L), welche Lampe (L), zur Speisung eine Schaltung aufweist, welche Schaltung als Wandler (W) einen Eintakt-Sperrwandler mit einem elektronischen Schalter, insbesondere einem Transistor (T), zur Schaltung eines Primärstromes (Ip) durch den Wandler (W) aufweist, wobei das Verfahren die folgenden Schritte aufweist:
• Bestimmung von ersten Steuerparametern, umfassend eine erste Frequenz (f1) und eine Einschaltdauer (TON1),
• Bestimmung von zweiten Steuerparametern, umfassend eine zweite Frequenz (f2) und eine Freigabedauer (TON2), wobei die zweite Frequenz tiefer ist als die erste Frequenz,
• Ansteuern des Schalters (T) mit einem periodischen Signal mit einer Periode (1/f2) entsprechend der zweiten Frequenz (f2), indem jeweils in einer solchen Periode (1/f2)
o während der Freigabedauer (TON2) der Schalter (T) mit einem Steuersignal mit der ersten Frequenz (f1) und der Einschaltdauer (TON1) angesteuert wird; und
o in der verbleibenden Zeit der Periode (1/f2) der Schalter (T) nicht angesteuert wird;
• Bestimmen mindestens eines der ersten und zweiten Steuerparameter (fl, f2, TON1, TON2) durch eine Stromsteuerung (3), zur Steuerung des Primärstroms (Ip).

## Claims

1. **Electronic circuit** for lighting a fluorescent lamp (L) powered by an accumulator, which circuit as converter (W) comprises a one-stroke blocking oscillator with an electronic switch, in particular with a transistor (T), for switching a primary electric current (Ip) by the converter (W), and which circuit comprises the following control components:
• a combined PWM-signal control (2, 4), which is designed, on the basis of first control parameters, comprising a first frequency (f1) and a switching-on duration (TON1), and on the basis of second control parameters, comprising a second frequency (f2) and a release duration (TON2), to form a first PWM-signal for controlling the electronic switch (T) of the converter (W), wherein the second frequency (f2) is lower than the first frequency (f1),
• an electric current control (3), which controls the primary electric current (Ip) through the converter (W), in that it determines the first and the second control parameters (fl, f2, TON1, TON2) of the two PWM-signal control systems (2, 4),
wherein the PWM-signal control system (2, 4) is designed to form a signal repeated with the second frequency (f2), which respectively in a period (1/f2) only during the release duration (TON2) comprises a sequence of pulses with the switching-on duration (TON1) of pulses repeated with a first frequency (f1).

2. Electronic circuit in accordance with claim 1, comprising a current determining means for the determining of a representative value for the primary electric current (Ip) controlled by the electronic switch (T), wherein the electric current control system (3) is designed for the adaptation of at least one of the control parameters (fl, f2, TON1, TON2) of the PWM-signal on the basis of this representative value and thereby for controlling the primary current (Ip).

3. Electronic circuit in accordance with claim 2, wherein the electric current determining means is a measuring and filtering circuit (2) for determining a measured value of the primary current (Ip) by means of a measurement with subsequent filtering.

4. Electronic circuit in accordance with claim 3, wherein the measuring and filtering circuit (2), for measuring and filtering the primary electric current (Ip) is formed through a resistance (R) and an amplifier and is thereby designed for determining a temporal average value of the primary electric current (Ip).

5. Electronic circuit in accordance with claim 4, wherein the current determination means is designed for determining a theoretical value for the primary electric current (Ip) on the basis of a measurement of an accumulator voltage of accumulator (B) supplying the converter (W).

6. Electronic circuit in accordance with claim 5, wherein the electric current determining means is designed for the calculation of the theoretical value for the primary electric current (Ip) on the basis of the measurement of the accumulator voltage, a primary inductivity (P) of the converter (W) and the control parameters (fl, f2, TON1, TON2) of both PWM-signals.

7. Electronic circuit in accordance with claim 5, wherein the electric current determining means is designed for selecting the theoretical value for the primary electric current (Ip), on the basis of the measurement of the accumulator voltage, from at least one table stored in memory.

8. Electronic circuit in accordance with one of the preceding claims, wherein the first frequency is higher than 10 kHz, in preference higher than 16 kHz.

9. Electronic circuit in accordance with one of the preceding claims, wherein the second frequency is higher than 50 Hz, in preference higher than 100 Hz.

10. **Emergency lamp,** comprising an electronic circuit in accordance with one of the claims 1 to 9 for lighting a fluorescent lamp (L).

11. **Method** for lighting an accumulator powered fluorescent lamp (L), which lamp (L) for its supply comprises a circuit, which circuit as converter (W) comprises a one-stroke blocking oscillator with an electronic switch, in particular a transistor (T) for switching a primary electric current (Ip) by the converter (W), wherein the process comprises the following steps:
• determining of first control parameters, comprising a first frequency (f1) and a switching-on duration (TON1),
• determining of second control parameters, comprising a second frequency (f2) and a release duration (TON2), wherein the second frequency is lower than the first frequency,
• driving the switch (T) with a periodic signal with a period (1/f2) corresponding to the second frequency (f2), in that, respectively, in such a period (1/f2)
o during the release duration (TON2) the switch (T) is driven with a control signal with the first frequency (f1) and the switching-on duration (TON1); and
o in the remaining time of the period (1/f2) the switch (T) is not driven;
• determining of at least one of first and second control parameters (fl, f2, TON1, TON2) by an electric current control (3) for controlling the primary electric current (Ip).

## Revendications

1. **Circuit électronique** destiné à allumer une lampe à fluorescence (L) alimentée par accumulateur, le circuit présentant comme convertisseur (W) un convertisseur de blocage monostable doté d'un commutateur électronique, en particulier d'un transistor (T), qui commute un courant primaire (Ip) dans le convertisseur (W) et le circuit présentant les composants de commande suivantes :
une commande combinée de signal PWM (2, 4) configurée pour former un premier signal (PWM) qui commande le commutateur électronique (T) du convertisseur (W) à l'aide de premiers paramètres de commande qui comprennent une première fréquence (f1) et une durée de branchement (TON1) et à l'aide de deuxièmes paramètres de commande qui comprennent une deuxième fréquence (f2) et une durée de libération (TON2), la deuxième fréquence (f2) étant plus basse que la première fréquence (f1),
une commande de courant (3) qui contrôle le courant primaire (Ip) qui traverse le convertisseur (W) en déterminant les premiers et les deuxièmes paramètres de commande (f1, f2, TON1, TON2) des deux commandes (2, 4) de signal PWM,
la commande (2, 4) de signal PWM étant configurée pour répéter à la deuxième fréquence (f2) un signal qui présente dans une période (1/f2) uniquement pendant la durée de libération (TON2) une succession d'impulsions répétées à la première fréquence (f1) et dont la durée de branchement est TON1.

2. Commande électronique selon la revendication 1, présentant un moyen de détermination du courant qui détermine une valeur représentative du courant primaire (Ip) commandé par le commutateur électronique (T), la commande de courant (3) étant configurée pour adapter au moins l'un des paramètres de commande (f1, f2, TON1, TON2) du signal PWM à l'aide de cette valeur représentative pour ainsi réguler le courant primaire (Ip).

3. Commande électronique selon la revendication 2, dans lequel le moyen de détermination du courant est un circuit (2) de mesure et de filtrage qui détermine une valeur de mesure du courant primaire (Ip) par une mesure suivie d'un filtrage.

4. Commande électronique selon la revendication 3, dans lequel le circuit de mesure et de filtrage (2) est configuré pour mesurer et filtrer le courant primaire (Ip) par l'intermédiaire d'une résistance (R) et d'un amplificateur et est ainsi configuré pour déterminer une valeur temporelle moyenne du courant primaire (Ip).

5. Commande électronique selon la revendication 4, dans lequel le moyen de détermination du courant est configuré pour déterminer une valeur théorique du courant primaire (Ip) à l'aide d'une mesure de la tension d'un accumulateur (B) qui alimente le convertisseur (W).

6. Commande électronique selon la revendication 5, dans lequel le moyen de détermination du courant est configuré pour calculer la valeur théorique du courant primaire (Ip) à l'aide de la mesure de la tension de l'accumulateur, de l'inductance primaire (P) du convertisseur (W) et des paramètres de commande (f1, f2, TON1, TON2) des deux signaux PWM.

7. Commande électronique selon la revendication 5, dans lequel le moyen de détermination du courant est configuré pour lire la valeur théorique du courant primaire (Ip) à l'aide de la mesure de la tension de l'accumulateur dans au moins un tableau conservé en mémoire.

8. Commande électronique selon l'une des revendications précédentes, dans lequel la première fréquence est supérieure à 10 kHz et de préférence supérieure à 16 kHz.

9. Commande électronique selon l'une des revendications précédentes, dans lequel la deuxième fréquence est supérieure à 50 Hz et de préférence supérieure à 100 Hz.

10. **Eclairage de secours** contenant un circuit électronique selon l'une des revendications 1 à 9 pour l'allumage d'une lampe à fluorescence (L).

11. **Procédé** d'allumage d'une lampe à fluorescence (L) alimentée par accumulateur, la lampe (L) présentant pour son alimentation un circuit qui présente comme convertisseur (W) un convertisseur de blocage monostable doté d'un commutateur électronique, en particulier d'un transistor (T) qui commute un courant primaire (Ip) dans le convertisseur (W), le procédé comportant les étapes suivantes :
détermination de premiers paramètres de commande comprenant une première fréquence (f1) et une durée de branchement (TON1),
détermination de deuxièmes paramètres de commande qui comprennent une deuxième fréquence (f2) et une durée de libération (TON2), la deuxième fréquence étant plus basse que la première fréquence,
commande du commutateur (T) par un signal périodique dont la période (1/f2) correspond à la deuxième fréquence (f2), par le fait que pendant cette période (1/f2) :
pendant la durée de libération (TON2), le commutateur (T) est commandé par un signal de commande qui présente la première fréquence (f1) et la durée de branchement (TON1) et
dans le reste de la période (1/f2), le commutateur (T) n'est pas commandé,
détermination d'au moins l'un des premiers et des deuxièmes paramètres de commande (f1, f2, TON1, TON2) par une commande de courant (3) pour commander le courant primaire (Ip).
